# EUROPEAN PATENT SPECIFICATION

(11) **EP 3 282 332 B1**
(45) Date of publication and mention of the grant of the patent: **24.06.2020**
(21) Application number: 17747403.8
(22) Date of filing: 31.01.2017
(51) Int. Cl.: G05B 19/05, G05B 19/042

(54) **PRODUCTION INFORMATION COLLECTING SYSTEM**
SYSTEM ZUR ERFASSUNG VON PRODUKTIONSINFORMATIONEN
SYSTÈME DE COLLECTE D'INFORMATIONS DE PRODUCTION

(30) Priority: 04.02.2016 JP 2016019529
(43) Date of publication of application: 14.02.2018
(73) Proprietor: Knowledge Manufacturing Company, Kawasaki-shi, Kanagawa 213-0012 (JP)
(72) Inventor: TAKASE, Atsuhiko, Kawasaki-shi, Kanagawa 213-0012 (JP); ABE, Shinichi, Kawasaki-shi, Kanagawa 213-0012 (JP); SATO, Seiki, Kawasaki-shi, Kanagawa 213-0012 (JP)
(74) Representative: Markfort, Iris-Anne Lucie
(86) International application number: PCT/JP2017/003403
(87) International publication number: WO 2017/135247

(56) References cited:
- JP-A- 2002 182 720
- JP-A- 2006 107 167
- JP-A- 2007 304 641
- JP-A- 2008 077 187
- JP-A- 2009 217 708
- JP-A- 2016 001 376
- US-A1- 2005 132 113
- US-B2- 7 843 966

## Description

### Technical Field

The present invention relates to a production information collecting system used in a software/hardware integrated-type complex control system or the like.

### Background Art

In manufacturing plants for automobile components and the like, various processing machines such as a molding machine, a press machine, a cutting machine, a grinding machine, and a cast and wrought automated machine are installed. Production information in these processing machines is intensively managed by a computer system installed in the plants (see Patent Literature 1).

Each of the processing machines includes a control unit that controls operations of the processing machine and absorbs data for grasping an operation state thereof. As the data for grasping an operation state, there are a large number of items such as "cycle time", "fill-up time", "measurement time", "pre-fill-up position", "VP switch position", "minimum cushion position", "pressure-keeping completion position", "fill-up peak", "entire area pressure-keeping peak pressure", "mold locking force: peak", "back pressure during measurement", "pack pressure", "screw operation time during pressure-keeping", "fill-up 1 hour", "Z1: temperature track record", "Z2: temperature track record", "Z3: temperature track record", "Z4: temperature track record", "Z5 (Z15a): temperature track record", and "Z15 (Z15b): temperature track record" as exemplary items. In the managing computer system, these pieces of data are received from the control unit of each processing machine to be accumulated and used as production information.

### Citation List

### Patent Literature

Patent Literature 1: Japanese Patent Application Laid-open No. 2002-006932;
Patent Literature 2: US Patent Application US 2008/021573 A1:Patent Literature 2 describes a module for expanding a central module of an automation system, the data transfer between module and central module being accomplished by means of a serial communication system having point-to-point connections in a daisy-chain or backplane layout and the module having, in a physical layer herefor, at least two transmitters and at least two receivers. There is also described a communication system having at least one module of said kind and a central module. A module for a communication system within an automation system is specified, which module can be flexibly and easily adapted to the respective field of application. There is further described a flexible and scalable communication system for the data transfer between a central module/a CPU and at least one module with the aim of realizing a modular expansion of the central module/CPU. A physical layer can be parameterized in order to adapt it to a predefinable field of application of the module, in particular in terms of speed, availability and/or expandability.

### Disclosure of Invention

### Technical Problem

Incidentally, production histories of components such as automobile components have been managed in lot units, for example, up to now. However, recently, so-called individual guarantee that guarantees products in individual units are being required in place of the lot guarantee as described above. Accordingly, a data amount to be collected and stored becomes enormous in the managing computer system.

Further, temperature data at a specific new position of the processing machine, switch on/off data, and the like may be required in some cases, in addition to the data that has been absorbed by the control unit up to now. In this case, various state detection sensors etc. such as a temperature measurement device, a vibration sensor, and a position sensor, and apparatuses such as a switch on/off detector may be newly attached to the processing machine so that these pieces of data can be transmitted to the computer system via the control unit. However, in a case where a software version of the control unit is old, it may become impossible to accommodate new apparatuses such as a temperature measurement device and a switch on/off detector. In this regard, if the software version of the control unit is upgraded for accommodating new apparatuses, that software may not be able to support the old apparatuses installed in the processing machine up to now. Therefore, there arises a problem that a new data output apparatus cannot easily be attached to the processing machine.

Further, a similar problem arises also in a case where a new processing machine is added to the plant. Specifically, in a case where, when accommodating a new processing machine in the managing computer system, the software version of the computer system is old or a manufacturer of the processing machine differs from that up to now, the new processing machine may not be able to be accommodated. In this regard, if the software version of the computer system is upgraded for accommodating the new processing machine, that software may not be able to support the old processing machine used up to now or may not be able to support the new processing machine even when upgraded. Therefore, there arises a problem that a new processing machine cannot be easily introduced into the plant.

In view of the circumstances as described above, the present invention aims at providing a production information collecting system in which a new data output apparatus or a new processing machine can be easily added and data to be stored can be reduced as much as possible.

### Solution to Problem

For solving the problems described above, a production information collecting system with the features of claim 1 is provided.

The plurality of slave units each function as a slave station and include a function of attaching address data to the logging data and the data not included in the logging data and transmitting the data to an upstream side in response to a request from an upstream master station, and also transmitting data from a downstream side to the upstream side. These plurality of slave units are connected in series.

The computer system functions as the master station with respect to the slave station, inputs the logging data and the data not included in the logging data, to each of which the address data is attached, from each of the slave units, deletes predetermined data from the logging data, and stores the logging data from which the data has been deleted and the data not included in the logging data.

In the production information collecting system according to the embodiment of the present invention, the computer system deletes predetermined data out of the logging data and stores the logging data obtained after deleting the data, so data to be stored can be reduced as much as possible.

Further, since the slave units each functioning as the slave station are connected in series and the logging data and the data not included in the logging data are collected from the processing machines via these slave units, a new data output apparatus or new processing machine can be added with ease.

Here, the slave units may be separately installed for the logging data, digital data out of the data not included in the logging data, and analog data out of the data not included in the logging data, respectively, and the slave unit with respect to the analog data out of the data not included in the logging data may include an A/D conversion function for converting the analog data into digital data.

Further, the digital data out of the data not included in the logging data may be on/off data of a switch on/off detector as the data output apparatus installed in the processing machine, and the analog data out of the data not included in the logging data may be measurement data of a measurement device as the data output apparatus installed in the processing machine. Advantageous Effects of Invention

According to the present invention, a new data collecting apparatus or new processing machine can be easily added, and data to be stored can be reduced as much as possible.

### Brief Description of Drawings

[Fig. 1] A block diagram showing a configuration of a production information collecting system according to an embodiment of the present invention.
[Fig. 2] A diagram schematically showing a flow of data processing in a computer system of the production information collecting system shown in Fig. 1.
[Fig. 3] A table showing an example of data stored in the computer system of the production information collecting system shown in Fig. 1.
[Fig. 4] A flowchart showing processing operations in the computer system of the production information collecting system shown in Fig. 1.
[Fig. 5] A graph showing an example of production information that can be referenced from a database in the production information collecting system shown in Fig. 1.

### Mode for Carrying Out the Invention

Hereinafter, an embodiment of the present invention will be described with reference to the drawings.

### <Configuration of production information collecting system>

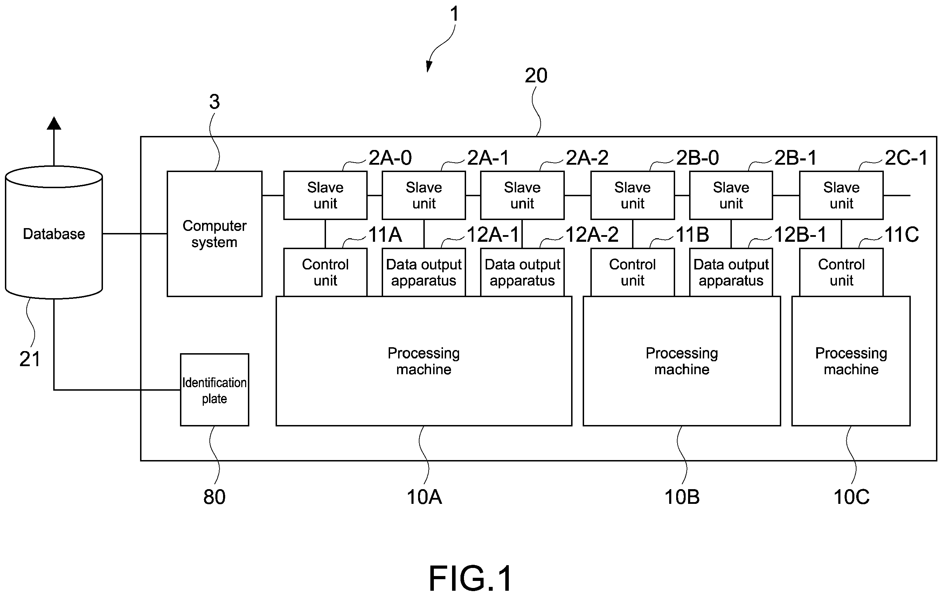

Fig. 1 is a diagram showing a configuration of a production information collecting system according to an embodiment of the present invention.

As shown in Fig. 1, a production information collecting system 1 is a system that collects production information in a plant 20 where components are produced using a plurality of processing machines 10A, 10B, ..., for example. The production information collecting system 1 also includes a database 21 installed outside the plant, for example.

As the processing machines 10A, 10B, ..., there are a molding machine, a press machine, a cutting machine, a grinding machine, a cast and wrought automated machine, and the like. In a case where the processing machines 10A, 10B, ... are molding machines, for example, the production information is information based on data such as the number of molding times, a molding temperature, a molding pressure, and a molding time.

The processing machines 10A, 10B, ... respectively include control units 11A, 11B, ..., and data output apparatuses 12A₋₁, 12A₋₂, 12B₋₁, .... The control units 11A, 11B, ... control operations of the processing machines 10A, 10B, ..., absorb data for grasping operation states thereof and the like, and output the data as logging data. The data output apparatuses 12A₋₁, 12A₋₂, 12B₋₁, ... output data not included in the logging data. The data output apparatus 12A₋₁ is, for example, a temperature measurement device, and outputs analog data. The data output apparatus 12A₋₂ is, for example, a switch on/off detector, and outputs on/off data as digital data.

The production information collecting system 1 includes a plurality of slave units 2A₋₀, 2A₋₁, 2A₋₂, 2B₋₀, ... and a computer system 3. The plurality of slave units 2A₋₀, 2A₋₁, 2A₋₂, 2B₋₀, ... are connected in series via a wiring 4. The computer system 3 accommodates these plurality of slave units 2A₋₀, 2A₋₁, 2A₋₂, 2B₋₀, ... that are connected in series via the wiring 4. Of the plurality of slave units 2A₋₀, 2A₋₁, 2A₋₂, 2B₋₀, ..., the slave units close to the computer system 3 side will be referred to as upstream-side slave units. In the example shown in Fig. 1, the slave unit 2A₋₀ becomes an uppermost-stream slave unit.

One or two or more slave units 2A₋₀, 2A₋₁, 2A₋₂, 2B₋₀, ... are installed with respect to each of the processing machines 10A, 10B, .... In the example shown in Fig. 1, the control unit 11A, the data output apparatus 12A₋₁ as the temperature measurement device, and the data output apparatus 12A₋₂ as the switch on/off detector are installed with respect to the processing machine 10A.

The data output apparatus 12A₋₁ as the temperature measurement device outputs measurement data obtained by the temperature measurement device as analog data. The data output apparatus 12A₋₂ as the switch on/off detector outputs digital data corresponding to opening/closing of a die, or the like.

In addition, the control unit 11A is connected to the slave unit 2A₋₀, the data output apparatus 12A₋₁ is connected to the slave unit 2A₋₁, and the data output apparatus 12A₋₂ is connected to the slave unit 2B₋₂.

The slave units 2A₋₀, 2A₋₁ 2A₋₂, 2B₋₀, ... each function as a slave station and include a function of attaching address data to each of the logging data and the data not included in the logging data and transmitting the data to the upstream side in response to a request from the computer system 3 as an upstream master station, and also transmitting data from the downstream side to the upstream side.

For example, the slave unit 2A₋₀ absorbs logging data from the control unit 11A of the processing machine 10A, and attaches unique address data to that logging data and transmits it to the upstream side in response to a request from the computer system 3, and the computer system 3 receives that data.

The slave unit 2A₋₁ includes an A/D conversion function for converting analog data into digital data. Measurement data (analog data) obtained by the data output apparatus 12A₋₁ of the processing machine 10A as the analog data temperature measurement device is A/D-converted in response to a request from the computer system 3, and unique address data is attached to this digital data and transmitted to the upstream side so that the computer system 3 receives the digital data.

The slave unit 2A₋₂ attaches unique address data to the data from the data output apparatus 12A₋₂ of the processing machine 10A and transmits the data to the upstream side in response to a request from the computer system 3 so that the computer system 3 receives this data.

The computer system 3 functions as a master station with respect to the slave stations, inputs the logging data and the data not included in the logging data, to each of which the address data is attached, from each of the slave units 2A₋₀, 2A₋₁, 2A₋₂, 2B₋₀, ..., deletes predetermined data from the logging data, and stores the logging data from which the data has been deleted and the data not included in the logging data. The computer system 3 is, for example, a PC, and executes the processing described above by an application operated on a general-purpose OS such as Windows (registered trademark).

### <Processing by computer system>

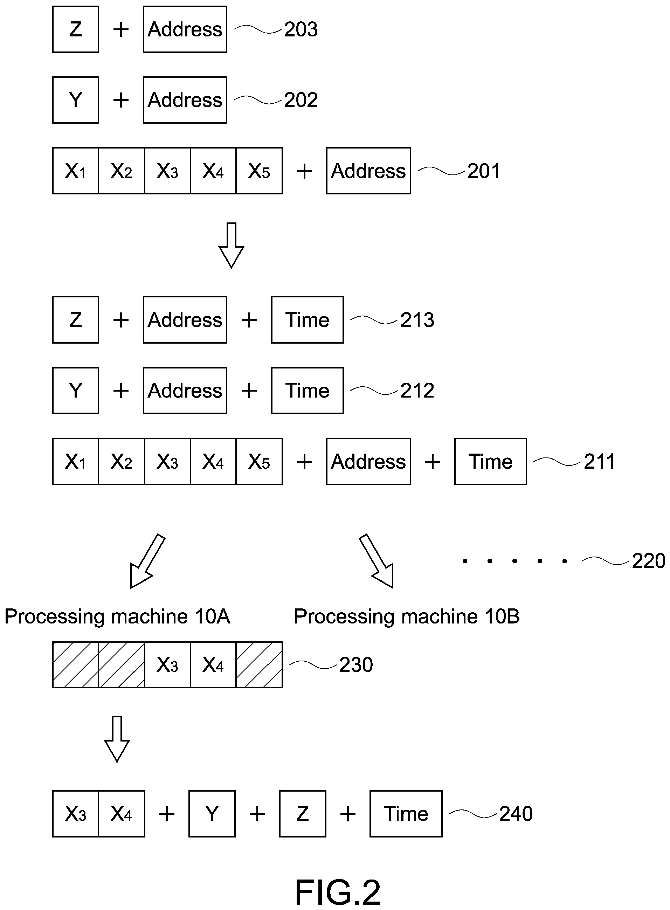

Fig. 2 is a diagram schematically showing a flow of data processing in the computer system 3.

Data input to the computer system 3 from the slave units 2A₋₀, 2A₋₁, 2A₋₂, 2B₋₀, ... via the wiring 4 is data including address data.

For example, data input to the computer system 3 from the slave unit 2A₋₀ is data obtained by attaching address data to logging data. The logging data includes various types of data from X₁ to X₅ (e.g., pressure data, temperature data at predetermined position, operation time data, etc. in processing machine), for example (reference numeral 201).

Data input to the computer system 3 from the slave unit 2A₋₁ is data obtained by attaching address data to temperature data Y (reference numeral 202).

Data input to the computer system 3 from the slave unit 2A₋₂ is data obtained by attaching address data to on/off data Z (reference numeral 203).

After that, these pieces of data are sequentially input to the computer system 3.

In the computer system 3, time data is first attached to these pieces of input data (reference numerals 211 to 213), and the pieces of data are sorted as data for each of the processing machines 10A, 10B, ... in accordance with the address data (reference numeral 220).

Next, in the computer system 3, unnecessary data is deleted from the logging data. For example, since X₁, X₂, and X₅ are unnecessary out of the logging data including X₁ to X₅ in the processing machine 10A, these pieces of data are deleted so as to leave data of X₃ and X₄ (reference numeral 230).

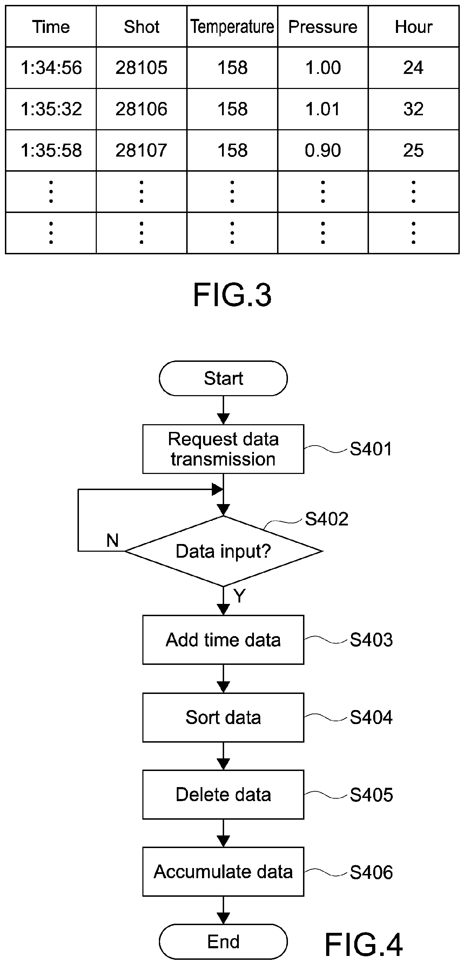

Finally, the logging data constituted of X₃ and X₄, the temperature data Y, and the on/off data Z are associated with one another using the time data as a key (reference numeral 240). Then, these pieces of data are accumulated in time units as shown in Fig. 3.

Processing operations of the computer system 3 described above are shown in the flowchart of Fig. 4.

In the computer system 3, as data transmission is requested with respect to the slave units 2A₋₀, 2A₋₁, 2A₋₂, 2B₋₀, ... (Step 401) and data is input (Step 402), time data is attached to the input data (Step 403) .

Next, the pieces of data to which the time data is attached are sorted as data for each of the processing machines 10A, 10B, ... in accordance with the address data (Step 404).

Next, unnecessary data is deleted from the logging data (Step 405).

Subsequently, the logging data from which the unnecessary data has been deleted (X₃ and X₄) and the data excluding the logging data (Y, Z) are accumulated (Step 406) .

Then, the computer system 3 transmits the accumulated data shown in Fig. 3, for example, to the database 21 (see Fig. 1).

### <Processing by database>

The database 21 (see Fig. 1) installed outside the plant processes data from the computer system 3 installed in Japan or abroad, for example.

A typical example of a data processing method carried out by the database 21 will be described.

For example, a molding machine is installed in the plant 20 as one of the processing machines 10A, 10B, ..., and an identification plate 80 (see Fig. 1) in which a uniquely-determined QR code (registered trademark) is engraved is attached to a die used in that molding machine. This identification plate 80 is attached not only to a die but also to the processing machines 10A, 10B, ... inside the plant 20.

When attaching the die to the molding machine, a worker in the plant 20 causes the QR code (registered trademark) of the identification plate 80 attached to the molding machine and the QR code (registered trademark) of the identification plate 80 attached to the die to be recognized using a camera-equipped information processing apparatus such as a tablet, for example. After that, recognition data corresponding to the QR code (registered trademark) recognized by an application of the information processing apparatus is transmitted to the database 21, and data of the molding machine and the recognition data of the die are associated with each other in the database 21. Accordingly, it becomes possible to grasp which die has been used from the data of the molding machine and calculate the total number of shots of the die, and the like.

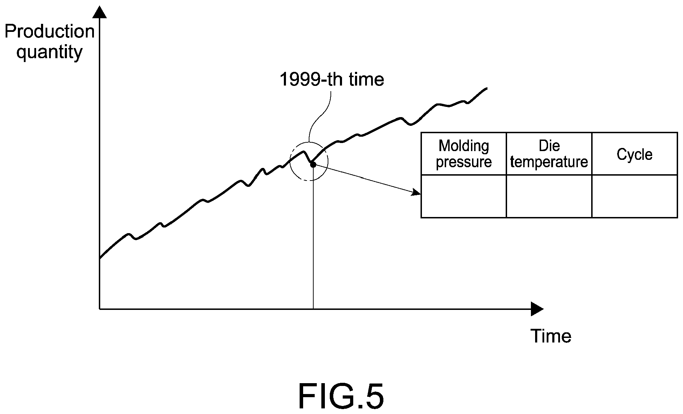

Further, in the database 21, it is possible to grasp under what conditions such as a temperature and pressure the n-th shot has been performed, for example, from the data of the molding machine. In addition, since a relationship between a time and a production quantity can be grasped from the data of the database 21 as shown in Fig. 5, for example, it is possible to grasp in which number of shots a defect has occurred in a shot, for example, from the relationship with the time, and thus verify the conditions such as a temperature and a pressure at a time the defect has occurred. It should be noted that the production quantity can be calculated from data of a counter that is attached to the molding machine and counts normal products, for example.

The database 21 outputs the data accumulated in this way as the production information as shown in Fig. 5 in response to a request from the information processing apparatus such as a tablet.

### <Conclusion>

In the production information collecting system 1 of this embodiment, the computer system 3 deletes predetermined data out of the logging data and stores the logging data obtained after deleting the data, so data to be stored can be reduced as much as possible.

Further, since the slave units 2A₋₀, 2A₋₁, 2A₋₂, 2B₋₀, ... each functioning as the slave station are connected in series and the logging data and the data not included in the logging data are collected from the control units 11A, 11B, ... and data output apparatuses 12A₋₁, 12A₋₂, 12B₋₁, ... of the processing machines 10A, 10B, ... via these slave units 2A₋₀, 2A₋₁, 2A₋₂, 2B₋₀, ..., a new data output apparatus or new processing machine can be added with ease. For example, when adding a new data output apparatus or new processing machine, a new slave unit connected to a control unit of the new data output apparatus or new processing machine only needs to be inserted in series anywhere among the slave units 2A₋₀, 2A₋₁, 2A₋₂, 2B₋₀, ... that are connected in series. Further, registration of predetermined data processing and the like only need to be carried out in the computer system 3. Therefore, a new data output apparatus or new processing machine can be added with ease. In other words, there is no need to consider consistency between a software version of the control unit and a version of the data output apparatus as in the past. Moreover, since the slave units 2A₋₀, 2A₋₁, 2A₋₂, 2B₋₀, ... function as the slave stations with respect to the computer system 3, and address data is simply attached to data and that data is transmitted to the master side in response to a request from the master station, there is no need to consider consistency between a software version of the computer system 3 and the software version of the control unit or the version of the data output apparatus as in the past.

### <Other embodiments>

The present invention is not limited to the embodiment described above, and various other embodiments can also be realized.

The production information collecting system according to the present invention is applicable to a software/hardware integrated-type complex control system or the like. The software/hardware integrated-type complex control system is a technology disclosed in, for example, Japanese Patent Application Laid-open No. 2015-156182, and is, for example, a technology including: a DB that includes an equipment specification of a processing machine for each individual processing machine and includes a component processing condition file for each component; a storage unit that determines, when changing the processing machine, whether the change is correct based on an equipment processing condition file before the change and the equipment specification after the change, and when determined as incorrect, stores an application that sets a new processing condition; and one control apparatus that includes a general-purpose program control OS that executes the application and a dedicated processing control OS that executes, under schedule management where a task corresponding to the newly-set equipment processing condition is prioritized and executed, control of the processing machine based on the task, in which the dedicated processing control OS places the general-purpose program control OS under the schedule management and manages a task with respect to the general-purpose program control OS as a low-priority task. In this case, it is only necessary to cause the general-purpose program control OS shown in Fig. 5 in Japanese Patent Application Laid-open No. 2015-156182 to execute the processing of the computer system in the production information collecting system according to the present invention.

Further, although the control unit and the data output apparatus are in a one-on-one relationship with the slave unit in the embodiment above, it is also possible for the slave unit to accommodate two or more control units or data output apparatuses.

Furthermore, a wireless connection may be made among the slave units or between the slave units and the computer system instead of a wired connection.

Moreover, although the computer system is installed inside the plant in the embodiment above, it is also possible to install the computer system at a remote location, for example, outside the plant.

Furthermore, although the computer system accommodates one of the slave unit groups connected in series in the embodiment above, the computer system may accommodate a plurality of slave unit groups.

### Reference Signs List

1 production information collecting system
2A₋₀, 2A₋₁, 2A₋₂, 2B₋₀ slave unit
3 computer system
10A, 10B processing machine
21 database
11A, 11B control unit
12A₋₁, 12A₋₂, 12B₋₁ data output apparatus

## Claims

1. A production information collecting system (1) that includes a plurality of processing machines (10A, 10B), a plurality of control units (11A, 11B) that are configured to absorb data from the processing machines (10A, 10B), and are further configured to output logging data based on the absorbed data, and a plurality of data output apparatuses (12A-1, 12A-2, 12B-1) that are configured to output data not included in the logging data, the plurality of data output apparatuses (12A-1, 12A-2, 12B-1) being measurement devices installed in the processing machines (10A, 10B) or switch on/off detectors installed in the processing machines (10A, 10B), the production information collecting system (1) being configured to collect the data from each of the plurality of processing machines (10A, 10B) via each of the "plurality of control units (11A, 11B) and via each of the plurality of data output apparatuses (12A-1, 12A-2, 12B-1), the production information collecting system (1) comprising
a plurality of slave units (2A-0, 2A-1, 2A-2, 2B-0), each of the plurality of slave units (2A-0, 2A-1, 2A-2, 2B-0) is configured to function as a slave station, and
a computer system (3) that is configured to function as a master station with respect to the slave stations, **characterized in that**:
the plurality of slave units (2A-0, 2A-1, 2A-2, 2B-0) and the computer system (3) are connected in series;
each of the plurality of slave units (2A-0, 2A-1, 2A-2, 2B-0) is connected to each of the plurality of control units (11A, 11B) and the plurality of data output apparatuses (12A-1, 12A-2, 12B-1), and is configured to, in response to a request from the computer system (3), attach address data to the logging data from each of the plurality of control units (11A, 11B), or attach the address data to the data not included in the logging data from each of the plurality of data output apparatuses (12A-1, 12A-2, 12B-1), and is further configured to transmit the logging data to which the address data is attached or the data not included in the logging data to which the address data is attached to the computer system (3) such that the computer system (3) receives the logging data to which the address data is attached or the data not included in the logging data to which the address data is attached; and
the computer system (3) is configured to receive the logging data to which the address data is attached or the data not included in the logging data to which the address data is attached from each of the plurality of the slave units (2A-0, 2A-1, 2A-2, 2B-0),
the computer system (3) is further configured to delete predetermined data from the logging data, and
the computer system (3) is further configured to store the logging data from which the data has been deleted and the data not included in the logging data.

2. The production information collecting system (1) according to claim 1, wherein
the slave units (2A-0, 2A-1, 2A-2, 2B-0) are separately installed for the logging data, digital data out of the data not included in the logging data, and analog data out of the data not included in the logging data, respectively, and
the slave unit (2A-0, 2A-1, 2A-2, 2B-0) with respect to the analog data out of the data not included in the logging data includes an A/D conversion function for converting the analog data into digital data.

3. The production information collecting system (1) according to claim 2, wherein
the digital data out of the data not included in the logging data is on/off data of a switch on/off detector as the data output apparatus (12A-1, 12A-2, 12B-1) installed in the processing machine (10A, 10B), and
the analog data out of the data not included in the logging data is measurement data of a measurement device as the data output apparatus (12A-1, 12A-2, 12B-1) installed in the processing machine (10A, 10B).

## Patentansprüche

1. Ein Produktionsinformations-Sammelsystem (1), das eine Vielzahl von Verarbeitungsmaschinen (10A, 10B) umfasst, eine Vielzahl von Steuereinheiten (11A, 11B), die konfiguriert sind, um Daten von den Verarbeitungsmaschinen (10A, 10B) zu absorbieren, und die ferner konfiguriert sind, um Protokolldaten auf der Grundlage der absorbierten Daten auszugeben, und eine Vielzahl von Datenausgabevorrichtungen (12A-1, 12A-2, 12B-1), die konfiguriert sind, um Daten auszugeben, die nicht in den Protokolldaten enthalten sind, wobei die Vielzahl von Datenausgabevorrichtungen (12A-1, 12A-2, 12B-1) in den Verarbeitungsmaschinen (10A, 10B) installierte Messvorrichtungen oder in den Verarbeitungsmaschinen (10A, 10B) installierte Ein-/Ausschaltdetektoren sind, wobei das Produktionsinformationssammelsystem (1) so konfiguriert ist, dass es die Daten von jeder der Vielzahl von Verarbeitungsmaschinen (10A, 10B) über jede der Vielzahl von Steuereinheiten (11A, 11B) und über jede der Vielzahl von Datenausgabevorrichtungen (12A-1, 12A-2, 12B-1) sammelt, wobei das Produktionsinformationssammelsystem (1) Folgendes umfasst
eine Vielzahl von Slave-Einheiten (2A-0, 2A-1, 2A-2, 2B-0), wobei jede der Vielzahl von Slave-Einheiten (2A-0, 2A-1, 2A-2, 2B-0) so konfiguriert ist, dass sie als eine Slave-Station funktioniert, und
ein Computersystem (3), das so konfiguriert ist, dass es als Master-Station in Bezug auf die Slave-Stationen funktioniert,
**dadurch gekennzeichnet, dass**
die Mehrzahl der Slave-Einheiten (2A-0, 2A-1, 2A-2, 2B-0) und das Computersystem (3) in Reihe geschaltet sind;
jede der Vielzahl von Nebeneinheiten (2A-0, 2A-1, 2A-2, 2B-0) mit jeder der Vielzahl von Steuereinheiten (11A, 11B) und der Vielzahl von Datenausgabevorrichtungen (12A-1, 12A-2, 12B-1) verbunden ist und so konfiguriert ist, dass sie als Antwort auf eine Anforderung von dem Computersystem (3) Adressdaten an die Protokolldaten von jeder der Vielzahl von Steuereinheiten (11A, 11B) anhängT oder die Adressdaten an die Daten anhängT, die nicht in den Protokolldaten von jedem der Vielzahl von Datenausgabegeräten (12A-1, 12A-2, 12B-1) enthalten sind, und so konfiguriert ist, dass es die Protokolldaten, an die die Adressdaten angehängt sind, oder die Daten, die nicht in den Protokolldaten enthalten sind, an das Computersystem (3) überträgt, so dass das Computersystem (3) die Protokolldaten, an die die Adressdaten angehängt sind, oder die Daten, die nicht in den Protokolldaten enthalten sind, an die die Adressdaten angehängt sind, empfängt; und
das Computersystem (3) so konfiguriert ist, dass es von jeder der mehreren Slave-Einheiten (2A-0, 2A-1, 2A-2, 2B-0) die Protokolldaten, an die die Adressdaten angehängt sind, oder die Daten, die nicht in den Protokolldaten enthalten sind, an die die Adressdaten angehängt sind, empfängt,
das Computersystem (3) ferner so konfiguriert ist, dass es vorgegebene Daten aus den Protokolldaten löscht, und
das Computersystem (3) ferner so konfiguriert ist, dass es die Protokolldaten, aus denen die Daten gelöscht wurden, und die nicht in den Protokolldaten enthaltenen Daten speichert.

2. Das Produktionsinformations-Sammelsystem (1) nach Anspruch 1, wobei
die Slave-Einheiten (2A-0, 2A-1, 2A-2, 2B-0) für die Protokolldaten, digitale Daten aus den nicht in den Protokolldaten enthaltenen Daten bzw. für die analogen Daten aus den nicht in den Protokolldaten enthaltenen Daten separat installiert werden, und
die Slave-Einheit (2A-0, 2A-1, 2A-2, 2B-0) mit Rücksicht auf die analogen Daten aus den nicht in den Protokolldaten enthaltenen Daten eine A/D-Wandlungsfunktion zur Umwandlung der analogen Daten in digitale Daten enthält.

3. Das Produktionsinformations-Sammelsystem (1) nach Anspruch 2, wobei
die digitalen Daten aus den nicht in den Protokolldaten enthaltenen Daten Ein/Aus-Daten eines Ein/Aus-Detektors als Datenausgabegerät (12A-1, 12A-2, 12B-1) sind, der in der Verarbeitungsmaschine (10A, 10B) installiert ist, und
die analogen Daten aus den nicht in den Protokollierungsdaten enthaltenen Daten sind Messdaten eines Messgerätes als Datenausgabegerät (12A-1, 12A-2, 12B-1), das in der Verarbeitungsmaschine (10A, 10B) installiert ist.

## Revendications

1. Système de collecte d'informations de production (1) qui comprend une pluralité de machines de traitement (10A, 10B), une pluralité d'unités de commande (11A, 11B) qui sont configurées pour absorber des données provenant des machines de traitement (10A, 10B), et qui sont en outre configurées pour délivrer des données d'enregistrement sur la base des données absorbées, et une pluralité d'appareils de sortie de données (12A-1, 12A-2, 12B-1) qui sont configurés pour délivrer des données non incluses dans les données d'enregistrement, la pluralité d'appareils de sortie de données (12A-1, 12A-2, 12B-1) étant des dispositifs de mesure installés dans les machines de traitement (10A, 10B) ou des détecteurs de marche/arrêt installés dans les machines de traitement (10A, 10B), le système de collecte d'informations de production (1) étant configuré pour collecter les données de chacune de la pluralité de machines de traitement (10A, 10B) via chacune de la pluralité d'unités de commande (11A, 11B) et via chacun de la pluralité d'appareils de sortie de données (12A-1, 12A-2, 12B-1), le système de collecte d'informations de production (1) comprenant
une pluralité d'unités esclaves (2A-0, 2A-1, 2A-2, 2B-0), chacune de la pluralité d'unités esclaves (2A-0, 2A-1, 2A-2, 2B-0) est configurée pour fonctionner comme une station esclave, et
un système informatique (3) qui est configuré pour fonctionner comme une station maître par rapport aux stations esclaves, caractérisé en cela :
la pluralité d'unités esclaves (2A-0, 2A-1, 2A-2, 2B-0) et le système informatique (3) sont connectés en série;
chacune de la pluralité d'unités esclaves (2A-0, 2A-1, 2A-2, 2B-0) est connectée à chacune de la pluralité d'unités de commande (11A, 11B) et de la pluralité d'appareils de sortie de données (12A-1, 12A-2, 12B-1), et est configurée pour, en réponse à une demande du système informatique (3), joindre les données d'adresse aux données d'enregistrement de chaque appareil de la pluralité d'unités de commande (11A, 11B), ou joindre les données d'adresse aux données non incluses dans les données d'enregistrement de chaque appareil de la pluralité d'appareils de sortie de données (12A-1, 12A-2, 12B-1), et est configuré pour transmettre les données de journalisation auxquelles les données d'adresse sont jointes ou les données non incluses dans les données de journalisation auxquelles les données d'adresse sont jointes au système informatique (3) de telle sorte que le système informatique (3) reçoive les données de journalisation auxquelles les données d'adresse sont jointes ou les données non incluses dans les données de journalisation auxquelles les données d'adresse sont jointes ; et
le système informatique (3) est configuré pour recevoir les données d'enregistrement auxquelles les données d'adresse sont attachées ou les données non incluses dans les données d'enregistrement auxquelles les données d'adresse sont attachées de chacune de la pluralité des unités esclaves (2A-0, 2A-1, 2A-2, 2B-0),
le système informatique (3) est en outre configuré pour supprimer des données prédéterminées des données d'enregistrement, et le système informatique (3) est en outre configuré pour stocker les données de journalisation dont les données ont été supprimées et les données non incluses dans les données de journalisation.

2. Le système de collecte d'informations de production (1) selon la revendication 1, dans lequel
les unités esclaves (2A-0, 2A-1, 2A-2, 2B-0) sont installées séparément pour les données d'enregistrement, les données numériques parmi les données non incluses dans les données d'enregistrement et les données analogiques parmi les données non incluses dans les données d'enregistrement, respectivement, et l'unité esclave (2A-0, 2A-1, 2A-2, 2B-0), en tenant compte des données analogiques parmi les données non incluses dans les données d'enregistrement, comprend une fonction de conversion A/N pour convertir les données analogiques en données numériques.

3. Le système de collecte d'informations de production (1) selon la revendication 2, dans lequel
les données numériques parmi les données non incluses dans les données d'enregistrement sont les données de marche/arrêt d'un détecteur de marche/arrêt en tant qu'appareil de sortie de données (12A-1, 12A-2, 12B-1) installé dans la machine de traitement (10A, 10B), et
les données analogiques parmi les données non incluses dans les données d'enregistrement sont les données de mesure d'un appareil de mesure comme l'appareil de sortie des données (12A-1, 12A-2, 12B-1) installé dans la machine de traitement (10A, 10B).
